# FASCICULE DE BREVET EUROPEEN

(11) **EP 3 405 362 B1**
(45) Date de publication et mention de la délivrance du brevet: **04.03.2020**
(21) Numéro de dépôt: 17706547.1
(22) Date de dépôt: 19.01.2017
(51) Int. Cl.: B60K 11/08

(54) **SYSTÈME DE GESTION D'ENTRÉE D'AIR POUR OBTURATEUR ACTIF DE CALANDRE**
LUFTZUFUHRSTEUERUNGSSYSTEM FÜR EINE AKTIVE GITTERKLAPPE
AIR INFLOW CONTROL SYSTEM FOR AN ACTIVE GRILLE SHUTTER

(30) Priorité: 20.01.2016 FR 1650439
(43) Date de publication de la demande: 28.11.2018
(73) Titulaire: Valeo Systemes Thermiques, 78322 Le Mesnil Saint-Denis (FR)
(72) Inventeur: HERLEM, Jean-Paul, 78322 Le Mesnil Saint Denis Cedex (FR); GERBER, Sylvain, 78322 Le Mesnil Saint Denis Cedex (FR)
(74) Mandataire: Tran, Chi-Hai
(86) Numéro de dépôt international: PCT/FR2017/050112
(87) Numéro de publication internationale: WO 2017/125686

(56) Documents cités:
- EP-A1- 2 641 768
- WO-A1-2015/074675
- GB-A- 2 332 656
- US-A- 4 753 288

## Description

La présente invention concerne le domaine de la gestion d'entrée d'air pour véhicule automobile et notamment pour les obturateurs actifs de calandre d'un véhicule.

Un véhicule peut comprendre un dispositif d'obturation, parfois appelé obturateur actif de calandre, ou encore module d'entrée d'air piloté. Un tel dispositif est également désigné par l'acronyme AGS (pour « *Active Grille Shutter* » en anglais).

Le dispositif permet d'ouvrir ou de fermer l'accès de l'air via une calandre de véhicule automobile.

En position ouverte, l'air peut circuler à travers la calandre et participer au refroidissement du moteur du véhicule automobile. En position fermée, l'air ne pénètre pas via la calandre, ce qui réduit la trainée et permet ainsi de réduire la consommation de carburant et l'émission de CO₂.

L'AGS permet donc de réduire la consommation d'énergie et la pollution lorsque le moteur n'a pas besoin d'être refroidi par l'air extérieur.

Un AGS comprend de manière conventionnelle un actionneur (également dénommé actuateur ou moteur) commandant des volets et permettant l'ouverture ou la fermeture de l'entrée d'air : les volets sont ouverts lorsque le moteur du véhicule automobile a un besoin de refroidissement, les volets sont fermés lorsque le moteur du véhicule automobile est suffisamment refroidi.

Il a été constaté par le déposant que les volets (en position ouverte) peuvent vibrer sous l'action de l'écoulement turbulent de l'air pénétrant dans la calandre. Cette vibration entraine notamment une fatigue des matériaux constitutifs des volets et une pollution acoustique notable.

Par ailleurs, il a été constaté par le déposant que les volets pouvaient se désolidariser de leur cadre (ou « frame » en anglais) dans certaines conditions comme des vibrations trop importantes des volets, la manipulation des opérateurs lors des opérations de montages sur le véhicule automobile, l'impact de particules/d'objets pénétrant dans la calandre lors du déplacement du véhicule automobile.

En effet, les volets ne sont souvent fixés sur le cadre que par « clipsage » ou par montage 45° (i.e. l'axe de rotation des volets au niveau du cadre possède une section allongée pouvant être introduits dans le cadre par un orifice en présentant la plus petite section de cet axe, une fois introduits et mis en position de fonctionnement, l'axe de rotation ne peut plus sortir par l'orifice, l'axe de rotation présentant alors à l'orifice une section plus importante que la dimension de l'orifice).

Ce mode de fixation ne permet pas toujours un bon maintien des volets sur la cadre en cas de vibrations importantes, de la présence d'objets étrangers introduits par la calandre ou encore en cas de manipulations importantes.

Dès lors, il existe un besoin pour limiter les vibrations des volets de l'AGS lors du déplacement du véhicule automobile, notamment pour assurer un maintien adéquat de ces volets sur le cadre de l'AGS.

EP 2 641 768 A1 décrit un système selon le préambule de la revendication 1. La présente invention vient améliorer la situation.

La présente invention vise alors un système de gestion d'entrée d'air pour obturateur actif de calandre, comprenant :
- un cadre comprenant au moins un logement ;
- un volet comprenant un axe de rotation de volet, ledit axe de rotation de volet étant adapté pour être installé dans ledit logement, le volet pouvant être mis, par rotation selon ledit axe de rotation, selon au moins une position ouverte dans laquelle l'air peut passer par l'entrée d'air, et une position fermée dans laquelle le volet empêche l'air de passer par l'entrée d'air ;
- une pièce mécanique adaptée pour maintenir ledit axe de rotation dans ledit logement lorsque ladite pièce mécanique est fixée sur le cadre ;

La pièce mécanique comporte une butée, ledit volet étant contre la butée lorsque ledit volet est mis dans ladite position ouverte.

Le système de l'invention peut donc être tout ou partie du système AGS d'un véhicule.

Le plus souvent l'axe de rotation du volet est sensiblement dans le plan du cadre (i.e. dans le plan principal du cadre).

La pièce mécanique mentionnée ci-dessus peut ainsi obstruer totalement ou partiellement le logement de l'axe de rotation et ainsi maintenir le volet en place.

Le fait que la pièce mécanique comporte également une butée permet un montage simplifié de l'AGS. En effet, lorsque le volet est installé sur le cadre, aucune butée ne vient gêner l'installation. Par la suite lorsque la fixation est finalisée (i.e. par l'ajout de la pièce mécanique venant maintenir l'axe de rotation en place), la butée est automatiquement positionnée à l'aide d'un même mouvement en usine.

Par ailleurs, la présence de la butée permet de limiter les vibrations du volet liées à l'écoulement turbulent de l'air à grande vitesse entrant dans l'AGS, lorsque le volet est en position ouvert.

De ce fait, ce système permet de minimiser les vibrations des volets de l'AGS à l'aide d'un système simple et peu coûteux à installer en usine.

Dans un mode de réalisation, le système de gestion d'entrée d'air peut comprendre en outre un moteur adapté pour faire tourner ledit volet. Le moteur peut être alors adapté pour amener le volet contre la butée.

Avantageusement, le moteur peut être en outre adapté pour induire une rotation supplémentaire comprise entre 0° et 20° après que le volet est contre la butée.

Ainsi, cette rotation supplémentaire induite (par exemple, à une extrémité du volet opposée à la butée) permet de mettre en légère torsion le volet puisque la partie du volet en contact avec la butée ne pourra pas tourner. Cette légère torsion permet de maintenir le volet en contact avec la butée même en présence de forte turbulence et ainsi assurer un confort acoustique adéquat lors de l'ouverture de l'AGS.

Bien entendu, dans ce mode de réalisation particulier, la borne inférieure de la plage ]0° ; 20°] peut être exclue puisqu'il est indiqué que le moteur induit, ici, une « *rotation supplémentaire* »*.*

Le moteur peut comprend une deuxième butée. La deuxième butée peut alors arrêter ledit moteur lorsque l'angle supplémentaire est atteint.

Ainsi, le contrôle du moteur au regard de la rotation supplémentaire est simple. Un dimensionnement adéquat de la deuxième butée du moteur permet de fixer la plage de rotation possible induite par le moteur de manière simple.

Par exemple, le cadre peut être configuré de telle sorte à permettre un montage de ladite pièce mécanique sur le cadre selon un axe sensiblement perpendiculaire à un plan principal du cadre.

Ainsi, dans ce mode de réalisation, le cadre ne doit pas posséder des excroissances ou des pièces ou une forme générale venant gêner un montage selon la direction sensiblement perpendiculaire au plan principal du cadre.

Ainsi, lorsque le cadre est positionné à plat sur un banc de montage (horizontal, par exemple), il est possible d'amener la pièce mécanique verticalement afin de venir la fixer sur ce cadre. Cette cinématique de montage permet d'avoir des outils de montage simples et peu coûteux.

En outre, la butée de la pièce mécanique peut comporter un biseau.

Ce biseau permet à la butée d'avoir une emprise sur la pièce mécanique la plus importante possible (la partie large du biseau pouvant alors être du côté du corps de la pièce mécanique) tout en minimisant l'utilisation de matière pour la fabrication de cette butée : un compromis entre coût et solidité de la pièce mécanique peut ainsi être trouvé.

Par ailleurs, la pièce mécanique peut être fixée sur le cadre par vissage ou par rivetage. D'autres modes de fixation peuvent être également utilisés.

Dans un mode de réalisation particulier, le vissage ou le rivetage peut être selon un axe sensiblement perpendiculaire à un plan principal du cadre.

Ainsi, lorsque le cadre est positionné à plat sur un banc de montage (horizontal, par exemple), il est possible de visser ou de riveter la pièce mécanique sur le cadre dans un mouvement vertical. Cette cinématique de montage permet d'avoir des outils de montage simples et peu coûteux.

Dans un mode de réalisation particulier, la pièce mécanique comporte une pluralité d'extensions destinées à s'étendre dans une direction parallèle à l'axe de rotation du volet, au moins une extension parmi la pluralité d'extensions formant ladite butée, la pluralité d'extensions présentant une forme générale en dents de scie.

D'autres caractéristiques et avantages de l'invention apparaîtront encore à la lecture de la description qui va suivre. Celle-ci est purement illustrative et doit être lue en regard des dessins annexés sur lesquels :
- les figures 1(a) et 1(b) illustrent une réalisation particulière d'un cadre d'obturateur actif de calandre avec ou sans volet(s) ;
- les figures 2(a) à 2(c) illustrent différentes positions d'ouverture de volets d'obturateur actif de calandre dans un mode de réalisation de l'invention ;
- les figures 3(a) et 3(b) illustrent une extrémité des volets d'obturateur actif de calandre munis ou non de butées dans un mode de réalisation de l'invention ;
- les figures 4(a) et 4(b) illustrent une extrémité des volets d'obturateur actif de calandre munis ou non de butées dans un autre mode de réalisation de l'invention ;
- la figure 5 illustre un mode de réalisation d'un moteur pour le contrôle de l'ouverture des volets dans un mode de réalisation de l'invention.

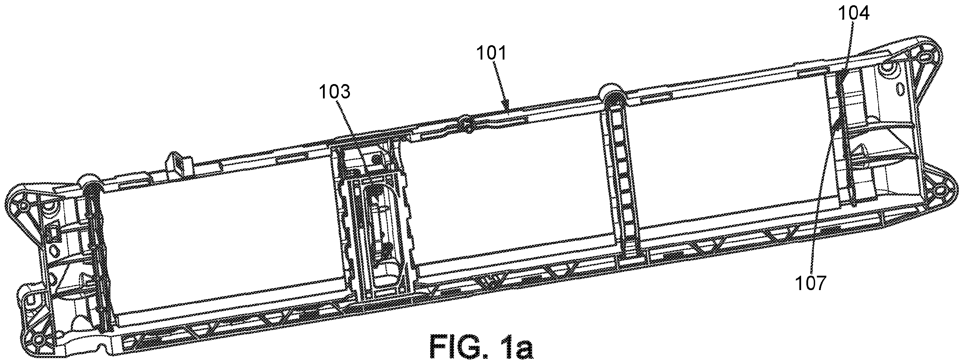

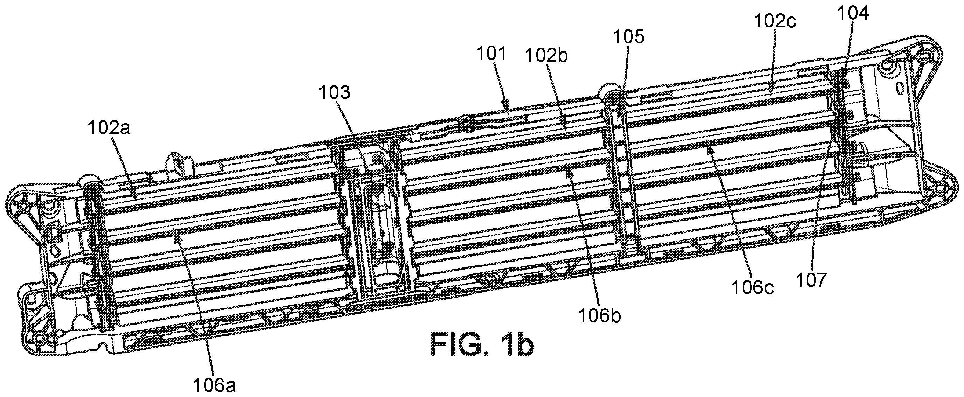

Les figures 1(a) et 1(b) illustrent une réalisation particulière d'un cadre d'obturateur actif de calandre respectivement sans et avec volet(s).

Le cadre 101 d'obturateur actif de calandre définit une entrée d'air et comprend notamment des ouvertures (ex. trois ouvertures dans ce mode de réalisation, mais un nombre différent peut exister) permettant de faire circuler de l'air de l'avant du véhicule vers le moteur afin de le refroidir.

Sur ce cadre 101, il peut être monté un moteur 103 permettant d'actionner des volets (non représentés sur la figure 1(a)) venant alors obstruer les ouvertures mentionnées ci-avant.

Par ailleurs, ce cadre 101 peut comporter des logements (ex. 104 et 107) aptes à venir accueillir un axe de rotation d'un volet : par exemple, le logement peut être de forme complémentaire à une extrémité de l'axe de rotation d'un volet. Ces logements peuvent être des renfoncements formés dans le cadre et pouvant recevoir les axes de rotation des volets. Il est bien entendu possible d'avoir des logements autres que des renfoncements, comme des clips ou des pièces en forme de U.

La figure 1(b) reprend l'exemple de la figure 1(a) dans lequel des volets (102a, 102b, 102c, 106a, 106b, 106c) ont été installés.

Dans cet exemple, le volet 102 comporte trois parties : 102a, 102b et 102c. Les parties 102a et 102b du volet 102 sont en prises directes avec le moteur 103. La partie 102c du volet 102 est connectée à la partie 102b via une pièce relais 105 (par exemple, un pivot) : lorsque la pièce 102b est entrainée en rotation par le moteur 103, la pièce 102c est également entrainée en rotation par l'action de la pièce relais 105. Ainsi l'ensemble du volet 102 tourne de manière synchrone même si ce volet 102 est composé de plusieurs parties indépendantes (102a, 102b, 102c).

Il en va de même pour les autres volets (ex. 106).

Bien entendu, les volets peuvent comporter un plus grand nombre de parties ou un plus petit nombre de parties en fonction notamment du mode de réalisation choisi et de la position du moteur 103.

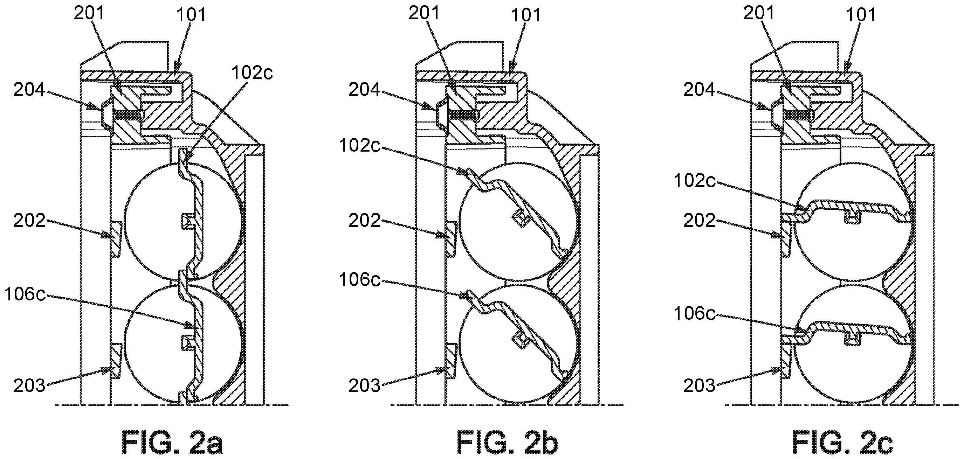

Les figures 2(a) à 2(c) illustrent différentes positions d'ouverture de volets d'obturateur actif de calandre dans un mode de réalisation de l'invention.

Dans ce mode de réalisation, une pièce mécanique 201 (appelé dans ce contexte « *clamp* » en anglais) est fixée sur le cadre 101 à l'aide notamment de la vis 204. Cette pièce mécanique 201 vient notamment obstruer (au moins partiellement) les logements du cadre évoqués précédemment.

Par ailleurs, des ergots ou butées sont réalisés sur cette pièce mécanique 201 (voir les éléments 202 et 203). Ces butées sont orientées, par exemple, selon une direction parallèle au plan principal du cadre 201 (ou selon une direction perpendiculaire au plan de coupe de la figure 2).

La figure 2(a) est une vue de coupe de l'obturateur actif de calandre pour une position fermée des volets : dans cette position fermée, l'air ne pénètre pas via l'AGS. Cette coupe est réalisée à une extrémité de l'obturateur actif de calandre à proximité des renfoncements 104 et 107.

La figure 2(b) est une vue de coupe de l'obturateur actif de calandre pour une position semi-ouverte des volets. Cette position semi-ouverte peut être transitoire (i.e. pour un passage entre une position ouverte à une position fermée ou réciproquement) ou être une position stable d'ouverture des volets (i.e. les volets sont maintenus dans cette position pendant une période de temps prolongée).

La figure 2(c) est une vue de coupe de l'obturateur actif de calandre pour une position ouverte des volets : dans cette position ouverte, l'air pénètre via l'AGS. Dans cette position ouverte, le volet 102c est situé contre la butée 202 et le volet 106c est situé contre la butée 203 : en d'autres termes, et à titre d'illustration, une extrémité du volet 102c (respectivement 106c) vient s'appuyer sur la butée 202 (respectivement 203).

Le fait que le volet 102c ou 106c soit contre la butée 202 ou 203 permet de réduire sensiblement les vibrations de ce volet lorsque l'air pénètre dans l'obturateur actif de calandre. Afin de garantir le contact entre la butée et le volet, il est également possible de forcer le moteur 103 à induire une rotation d'un angle supplémentaire compris entre 0° et 20° après que le volet est contre la butée (cela ne signifie pas que l'ensemble du volet tourne de cet angle supplémentaire). Par exemple, un angle supplémentaire de 10° donne de bons résultats sans endommager le moteur 103. Cela est possible, car le matériau constitutif du volet peut être légèrement déformable et il est possible de lui appliquer une légère surtorsion sans rupture ou fatigue excessive.

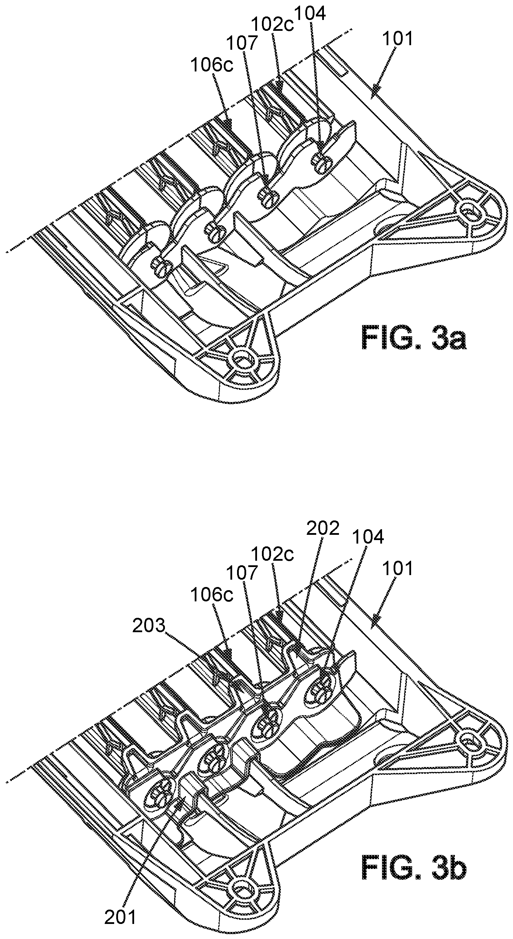

Les figures 3(a) et 3(b) illustrent une extrémité des volets d'obturateur actif de calandre munis ou non de butées dans un mode de réalisation de l'invention.

Dans le mode de réalisation de la figure 3(a), les logements (ex. 104 et 107) sont réalisés de manière oblique dans la matière d'une surface du cadre 101 (cette surface, dans laquelle sont réalisés les logements, est perpendiculaire au plan principal du cadre).

Ainsi, pour engager les extrémités des axes de rotation des volets (ex. 102c et 106c) et si le cadre est posé horizontalement sur un banc de montage, les volets sont amenés selon un angle de 45° par rapport à la verticale (par exemple) pour pouvoir les insérer dans leurs logements respectifs.

La figure 3(b) illustre le système de la figure 3(a) auquel est ajoutée la pièce mécanique 201 (ou « *clamp* »). Cette pièce mécanique 201 peut être fixée par un système de clip sur le cadre 101. Un autre système d'attache est également possible.

Dans le mode de réalisation de la figure 3(b), la pièce mécanique 201 vient maintenir les axes de rotation des volets dans leur logement respectif. En particulier, cette pièce mécanique 201 peut posséder des extensions venant au contact (ou quasi-contact) des axes de rotation des volets lorsque cette pièce mécanique 201 est fixée sur le cadre 101, le contact maintient l'axe de rotation au fond du renfoncement.

La pièce mécanique 201 comporte également des butées (ex. 202 et 203) en vis-à-vis des volets. Ces butées permettent aux volets de venir en contact lorsque les volets sont en position ouverts.

Les butées de la pièce mécanique 201 peuvent être de toute forme. Avantageusement, ces butées comportent des biseaux afin d'avoir une emprise sur la pièce mécanique la plus importante possible (la partie large du biseau étant du côté du corps de la pièce mécanique 201) tout en minimisant l'utilisation de matière pour la fabrication de ces butées : un compromis entre coût et solidité de la pièce mécanique 201 peut ainsi être trouvé.

Du fait de la conformation particulière de la pièce mécanique 201, la fixation de cette pièce mécanique 201 sur la cadre 101 est réalisée dans une direction proche de l'axe de rotation des volets.

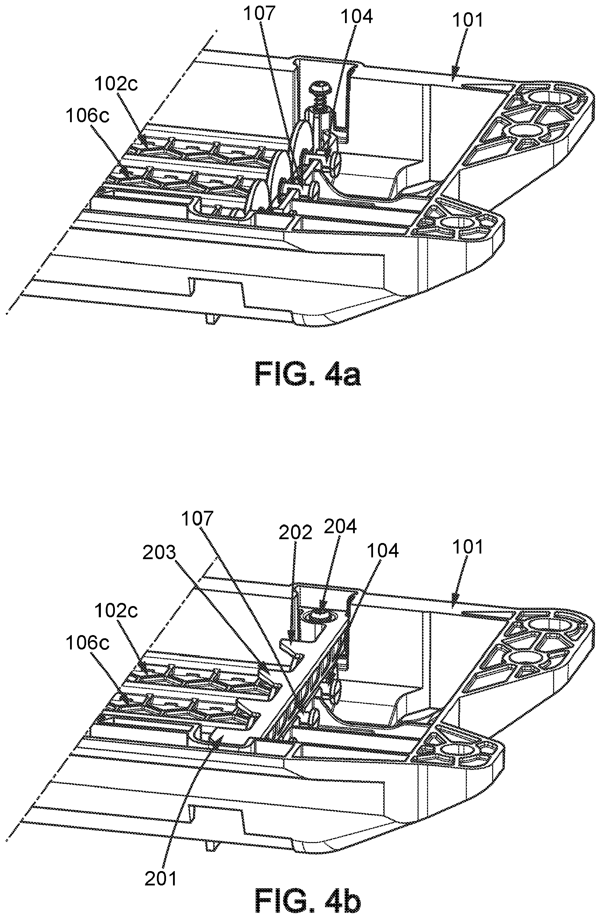

Les figures 4(a) et 4(b) illustrent une extrémité des volets d'obturateur actif de calandre munis ou non de butées dans un autre mode de réalisation de l'invention.

Dans le mode de réalisation de la figure 4(a), les logements (ex. 104 et 107) sont réalisés de manière verticale dans la matière d'une surface du cadre 101 (cette surface, dans laquelle sont réalisés les logements, est perpendiculaire au plan principal du cadre).

Ainsi, pour engager les extrémités des axes de rotation des volets (ex. 102c et 106c) et si le cadre est posé horizontalement sur un banc de montage, les volets sont amenés selon une direction verticale (ou proche de cette direction verticale) pour pouvoir les insérer dans leur logement respectif.

La figure 4(b) illustre le système de la figure 4(a) auquel est ajoutée la pièce mécanique 201 (ou « *clamp* » en anglais). Cette pièce mécanique 201 peut être fixée par un système de vis 204 sur le cadre 101, la vis étant ici dans une direction verticale (afin notamment de simplifier le montage sur les chaines industrielles). Un autre système d'attache est également possible.

Dans le mode de réalisation de la figure 4(b), la pièce mécanique 201 vient maintenir les axes de rotation des volets dans leur logement respectif. En particulier, la surface « inférieure » de cette pièce mécanique 201 peut être en contact (ou quasi-contact) des axes de rotation des volets lorsque cette pièce mécanique 201 est fixée sur le cadre 101, le contact maintient l'axe de rotation au fond du logement.

La pièce mécanique 201 comporte également des butées (ex. 202 et 203) en vis-à-vis des volets. Ces butées permettent aux volets de venir en contact lorsque les volets sont en position ouverts.

Du fait de la conformation particulière de la pièce mécanique 201 et si le cadre est posé horizontalement sur un banc de montage, la fixation de cette pièce mécanique 201 sur la cadre 101 peut être réalisée dans une direction proche la verticale (afin notamment de simplifier le montage sur les chaines industrielles).

Comme indiqué précédemment en relation de la figure 2, les butées de la pièce mécanique 201 peuvent être de toute forme (en particulier de forme biseautée).

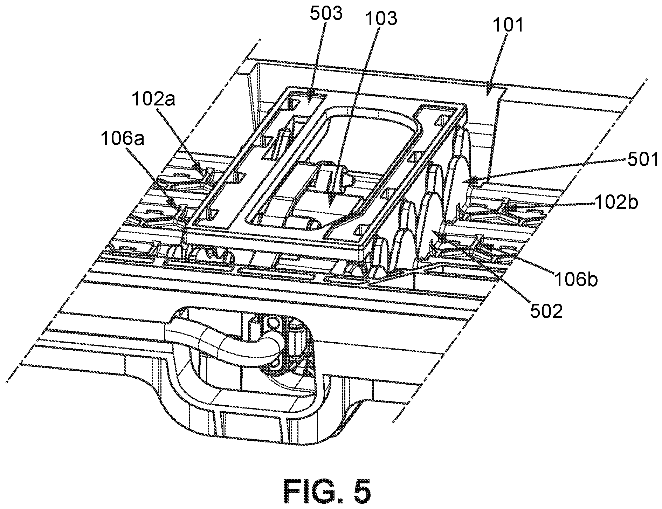

La figure 5 illustre un mode de réalisation d'un moteur pour le contrôle de l'ouverture des volets dans un mode de réalisation de l'invention.

Dans ce mode de réalisation, le moteur 103 peut entrainer en rotation les volets (ex. 102 (i.e. 102a et 102b) et 106 (i.e. 106a et 106b)) à l'aide des bras 501 et 502. En effet, le moteur entraine la pièce mécanique 503 selon une trajectoire elliptique tout en maintenant l'orientation générale de la pièce mécanique 503 constante (i.e. selon une orientation horizontale dans l'exemple de la figure 5) : en d'autres termes, la pièce mécanique 503 subit une translation selon une trajectoire elliptique.

Cette trajectoire est adaptée pour entrainer chaque extrémité des bras des volets (ex. 501 et 502) selon une trajectoire circulaire.

Ainsi, un actionnement du moteur peut permettre d'amener les volets (ex. 102, 106) en position ouverte, les volets étant alors en contact avec les butées (ex. 202, 203) de la pièce mécanique 201. Par ailleurs, le moteur peut être configuré pour continuer son mouvement après contact des volets avec les butées et ainsi induire une rotation supplémentaire de quelques degrés (entre 0 et 20°, par exemple) aux extrémités des bras (ex. 501 et 502) et ainsi de « forcer » le contact entre les volets et les butées.

Afin de mettre en œuvre cette rotation supplémentaire, il est possible :
- de programmer le moteur afin d'identifier les positions de début et de fin de son mouvement ; ou
- de prévoir que la pièce mécanique 503 vienne en contact avec le cadre 101 (par exemple) lorsque la position de fin est atteinte, l'arrêt du moteur étant alors conditionné au dépassement d'une valeur de résistance mécanique (force ou couple par exemple) au niveau du moteur. Ainsi, la forme de la pièce mécanique 503 peut permettre de simplement définir la rotation supplémentaire souhaitée. Cette pièce mécanique 503 agit alors comme une butée permettant d'arrêter le mouvement du moteur lorsque l'angle supplémentaire est atteint.

Bien entendu, la présente invention ne se limite pas aux formes de réalisation décrites ci-avant à titre d'exemples ; elle s'étend à d'autres variantes telles que définies par les revendications 1-9.

## Revendications

1. Système de gestion d'entrée d'air pour obturateur actif de calandre, comprenant :
- un cadre (101) comprenant au moins un logement (104, 107) ;
- un volet (102, 106) comprenant un axe de rotation de volet, ledit axe de rotation de volet étant adapté pour être installé dans ledit logement (104, 107), le volet pouvant être mis, par rotation selon ledit axe de rotation, selon au moins une position ouverte et une position fermée ;
- une pièce mécanique (201) adaptée pour maintenir ledit axe de rotation dans ledit logement (104, 107) lorsque ladite pièce mécanique (201) est fixée sur le cadre (101) ;
**caractérisé en ce que** la pièce mécanique (201) comporte une butée (202, 203), ledit volet (102, 106) étant contre la butée lorsque ledit volet (102, 106) est mis dans ladite position ouverte.

2. Système de gestion d'entrée d'air pour obturateur actif de calandre selon la revendication 1, comprenant en outre :
- un moteur (103) adapté pour faire tourner ledit volet (102, 106) ;
dans lequel le moteur (103) est adapté pour amener le volet (102, 106) contre la butée (202, 203).

3. Système de gestion d'entrée d'air pour obturateur actif de calandre selon la revendication 2, dans lequel le moteur (103) est en outre adapté pour induire une rotation supplémentaire comprise entre 0° et 20° après que le volet (102, 106) est contre la butée (202, 203).

4. Système de gestion d'entrée d'air pour obturateur actif de calandre selon la revendication 3, dans lequel le moteur (103) comprend une deuxième butée (503) et dans lequel la deuxième butée (503) arrête ledit moteur (103) lorsque l'angle supplémentaire est atteint.

5. Système de gestion d'entrée d'air pour obturateur actif de calandre selon l'une des revendications précédentes, dans lequel le cadre (101) est configuré de telle sorte à permettre un montage de ladite pièce mécanique (201) sur le cadre (101) selon un axe sensiblement perpendiculaire à un plan principal du cadre (101).

6. Système de gestion d'entrée d'air pour obturateur actif de calandre selon l'une des revendications précédentes, dans lequel ladite butée (202, 203) de ladite pièce mécanique (201) comporte un biseau.

7. Système de gestion d'entrée d'air pour obturateur actif de calandre selon l'une des revendications précédentes, dans lequel la pièce mécanique (201) est fixée sur le cadre (101) par vissage ou par rivetage.

8. Système de gestion d'entrée d'air pour obturateur actif de calandre selon la revendication 7, dans lequel le vissage ou le rivetage est selon un axe sensiblement perpendiculaire à un plan principal du cadre (101).

9. Système de gestion d'entrée d'air pour obturateur actif de calandre selon l'une des revendications précédentes, dans lequel la pièce mécanique (201) comporte une pluralité d'extensions destinées à s'étendre dans une direction parallèle à l'axe de rotation du volet (102c, 106c), au moins une extension parmi la pluralité d'extensions formant ladite butée (202, 203), la pluralité d'extensions présentant une forme générale en dents de scie.

## Patentansprüche

1. Lufteinlasssteuerungssystem für aktive Kühlergrill-Luftklappen, umfassend:
- einen Rahmen (101), der mindestens eine Aufnahme (104, 107) umfasst;
- eine Lamelle (102, 106), die eine Lamellendrehachse umfasst, wobei die Lamellendrehachse geeignet ist, in die Aufnahme (104, 107) eingebaut zu werden, wobei die Lamelle durch Drehen entlang der Drehachse in mindestens eine geöffnete Stellung und eine geschlossene Stellung gebracht werden kann;
- ein mechanisches Teil (201), das dazu geeignet ist, die Drehachse in der Aufnahme (104, 107) zu halten, wenn das mechanische Teil (201) am Rahmen (101) befestigt ist;
**dadurch gekennzeichnet, dass** das mechanische Teil (201) einen Anschlag (202, 203) umfasst, wobei die Lamelle (102, 106) am Anschlag ist, wenn die Lamelle (102, 106) in die geöffnete Stellung gebracht ist.

2. Lufteinlasssteuerungssystem für aktive Kühlergrill-Luftklappen nach Anspruch 1, umfassend ferner:
- einen Motor (103), der dazu geeignet ist, die Lamelle (102, 106) drehen zu lassen;
wobei der Motor (103) dazu geeignet ist, die Lamelle (102, 106) an den Anschlag (202, 203) zu führen.

3. Lufteinlasssteuerungssystem für aktive Kühlergrill-Luftklappen nach Anspruch 2, wobei der Motor (103) ferner dazu geeignet ist, eine zusätzliche Drehung zwischen 0° und 20° zu bewirken, nachdem die Lamelle (102, 106) am Anschlag (202, 203) ist.

4. Lufteinlasssteuerungssystem für aktive Kühlergrill-Luftklappen nach Anspruch 3, wobei der Motor (103) einen zweiten Anschlag (503) umfasst und wobei der zweite Anschlag (503) den Motor stoppt (103), wenn der zusätzliche Winkel erreicht ist.

5. Lufteinlasssteuerungssystem für aktive Kühlergrill-Luftklappen nach einem der vorhergehenden Ansprüche, wobei der Rahmen (101) so ausgestaltet ist, dass er eine Montage des mechanischen Teils (201) am Rahmen (101) entlang einer Achse ermöglicht, die im Wesentlichen senkrecht zu einer Hauptebene des Rahmens (101) ist.

6. Lufteinlasssteuerungssystem für aktive Kühlergrill-Luftklappen nach einem der vorhergehenden Ansprüche, wobei der Anschlag (202, 203) des mechanischen Teils (201) eine Abschrägung umfasst.

7. Lufteinlasssteuerungssystem für aktive Kühlergrill-Luftklappen nach einem der vorhergehenden Ansprüche, wobei das mechanische Teil (201) durch Schrauben oder durch Nieten am Rahmen (101) befestigt wird.

8. Lufteinlasssteuerungssystem für aktive Kühlergrill-Luftklappen nach Anspruch 7, wobei das Schrauben oder Nieten entlang einer Achse erfolgt, die im Wesentlichen senkrecht zu einer Hauptebene des Rahmens (101) ist.

9. Lufteinlasssteuerungssystem für aktive Kühlergrill-Luftklappen nach einem der vorhergehenden Ansprüche, wobei das mechanische Teil (201) eine Vielzahl von Erweiterungen umfasst, die dazu bestimmt sind, sich in eine Richtung parallel zur Drehachse der Lamelle (102c, 106c) zu erstrecken, wobei mindestens eine Erweiterung unter der Vielzahl von Erweiterungen den Anschlag (202, 203) bildet, wobei die Vielzahl von Erweiterungen eine Sägezahngrundform aufweist.

## Claims

1. Air inflow control system for an active grille shutter, comprising:
- a frame (101) comprising at least one housing (104, 107);
- a flap (102, 106) comprising a flap rotary shaft, said flap rotary shaft being adapted for installation in said housing (104, 107), the flap being capable of being placed, by rotation about said rotary shaft, in at least one open position and one closed position;
- a mechanical part (201) adapted to maintain said rotary shaft in said housing (104, 107) when said mechanical part (201) is secured to the frame (101);
**characterized in that** the mechanical part (201) includes an abutment (202, 203), said flap (102, 106) being positioned against the abutment when said flap (102, 106) is placed in said open position.

2. Air inflow control system for an active grille shutter according to Claim 1, further comprising:
- a motor (103) adapted to cause said flap (102, 106) to rotate;
in which the motor (103) is adapted to bring the flap (102, 106) against the abutment (202, 203).

3. Air inflow control system for an active grille shutter according to Claim 2, in which the motor (103) is further adapted to induce a supplementary rotation between 0° and 20° after the flap (102, 106) is against the abutment (202, 203).

4. Air inflow control system for an active grille shutter according to Claim 3, in which the motor (103) comprises a second abutment (503), and in which the second abutment (503) stops said motor (103) when the supplementary angle is reached.

5. Air inflow control system for an active grille shutter according to one of the preceding claims, in which the frame (101) is configured in such a way as to permit an assembly of said mechanical part (201) on the frame (101) in an axis substantially perpendicular to a principal plane of the frame (101).

6. Air inflow control system for an active grille shutter according to one of the preceding claims, in which said abutment (202, 203) of said mechanical part (201) contains a bevel.

7. Air inflow control system for an active grille shutter according to one of the preceding claims, in which the mechanical part (201) is secured to the frame (101) by screwing or by riveting.

8. Air inflow control system for an active grille shutter according to Claim 7, in which the screwing or the riveting is in an axis substantially perpendicular to a principal plane of the frame (101).

9. Air inflow control system for an active grille shutter according to one of the preceding claims, in which the mechanical part (201) includes a plurality of extensions intended to extend in a direction parallel to the rotary shaft of the flap (102c, 106c), at least one extension among the plurality of extensions forming said abutment (202, 203), the plurality of extensions exhibiting a generally sawtooth form.
